# EUROPEAN PATENT APPLICATION

(11) **EP 1 783 260 A1**
(43) Date of publication of application: **09.05.2007**
(21) Application number: 05110382.8
(22) Date of filing: 04.11.2005
(51) Int. Cl.: D06F 37/20, F16F 9/54

(54) **Machine for washing and/or drying laundry**

(71) Applicant: IAR-SILTAL S.p.A., 15040 Occimiano (AL) (IT)
(72) Inventor: Marchitto, Giuseppe, 15040 Occimiano (AL) (IT); Vassalli, Alberto, 15040 Occimiano (AL) (IT)
(74) Representative: Gallarotti, Franco

(57) **Abstract**

A machine for washing and possibly drying laundry comprising a structure (11) for supporting a washing tank and at least two telescopic shock absorbers (20) connected, at the respective upper end, in opposite areas of the lower region of the tank. Each shock-absorber (20) has a longitudinal extension comprised between approximately 160 and 190 mm, and has, at the respective lower end, a fork joint (21), having a base (22) to which there is associated a shock-absorbing plate (23) made of resilient material, the shock-absorbing element (23) bearing upon the structure in a lower region (24) of a respective flank or side wall (11a) of the structure itself.

## Description

The present invention relates to a machine for washing and/or drying laundry.

More in particular, the present invention relates to a machine of the type referred to in which the rotary drum has a considerable capacity without this entailing any increase in the standard overall dimensions of the machine itself.

It is known that washing machines, like other traditional household appliances, are built according to substantially standardized dimensions, which are compatible with the requirement of their installation in specific environments such as kitchens or service premises. According to this requirement, said machines are sized so as to be integrable in the context of kitchen units, especially in the frequent case of premises having a limited overall surface, in which it is fundamental to optimize the spaces available.

Typically, the overall dimensions in terms of depth and width, the latter being the more critical one, are, respectively, 54 cm and 60 cm, dimensions that correspond conventionally to furnishing modules of the containing-cabinet type and the like. Given said dimension of width, known washing machines are consequently able to house a rotary drum with a conventional capacity of 5 kg of laundry to wash for each cycle, which involves very precise functional limits. When this threshold is exceeded, in fact, it leads to the danger of seriously damaging the motion members of the machine, obtaining at the same time an unsatisfactory quality of washing on account of the amount of laundry in excess introduced into the rotary drum. For these reasons it is frequently necessary to carry out two or more washing cycles in close succession, with consequent expenditure in terms of hot and cold water, electrical energy, detergents and other soluble substances, such as softening agents. The possible use of washing machines of greater capacity, which are on the other hand known and able to wash at each cycle larger amounts of washing, comes up against the requirement referred to above of containing the critical overall dimensions in the domestic context, since said washing machines entail dimensions that are much larger than the ones previously referred to. The dimensional limit of the washing machines cited above basically regards the fact that the drum containing the washing is inevitably subjected, during the washing cycle and above all in the course of the centrifuging steps, to considerable transverse oscillations, which can further be accentuated in the case of unbalanced loads. The drum must therefore be sized so as not to interfere with the surrounding washing tank, and the latter, accordingly, requires adequate spaces around its circumference in order not to bump against the internal walls of the body containing the washing machine. All this determines the necessary sizing, and hence the capacity, of the drum into which the laundry that to be washed is introduced.

The purpose of the present invention is to overcome one or more of the drawbacks referred to above.

More in particular, a purpose of the present invention is to provide an improved machine for washing and/or drying laundry, in which the laundry drum has a good capacity, for receiving an amount of laundry considerably higher than five kilograms, albeit maintaining an overall dimension falling within the standard dimensions, in particular with a width of 60 cm and a depth of 54 cm.

Another purpose of the invention is to provide a machine for washing and drying laundry in which the oscillations in a transverse direction of the drum and of the corresponding tank are extremely contained both during the washing cycles and in the centrifuging steps.

Another purpose of the invention is to provide an improved machine for washing and/or drying laundry designed to optimize the washing cycles, enabling saving in terms of absorption of electrical energy, water and detergents or washing substances in general.

Another purpose of the invention is to make available to users an improved machine for washing and/or drying laundry, designed to guarantee a high level of resistance and reliability over time, such as moreover to be easy and inexpensive to produce.

The above and yet other purposes are achieved by the improved machine for washing and/or drying laundry according to the present invention, which comprises a containment body of a washing tank for a rotary drum provided with counterweights, as well as shock-absorbing means and elastic means connected to the internal walls of the body itself, and which is basically characterized in that said shock-absorbing means are constituted by telescopic shock absorbers of longitudinal extension comprised between 160 mm and 190 mm, connected in two or more opposite points to the base area of the tank and combined with a fork articulation or joint, the base of which comprises a shock-absorbing plate, made of resilient material, preferably elastomeric material, bearing upon said containment body.

The constructional and functional characteristics of the improved washing machine of the present invention may be understood more readily from the ensuing detailed description, in which reference is made to the annexed plate of drawings, which illustrates a preferred and non-limiting embodiment thereof and in which:
- Figure 1 is a partial and schematic perspective view from above of a washing machine according to the invention, without an upper panel;
- Figure 2 is a schematic perspective view that illustrates the region of a front door or porthole of the machine according to the invention;
- Figure 3 is a partial and schematic perspective view of an upper part of the supporting structure of the machine according to the invention, with some components of the machine omitted;
- Figure 4 is a schematic perspective view, at a larger scale, of a member for supporting elastic elements of the machine of Figure 3;
- Figure 5 is a partial and schematic perspective view of a lower part of the supporting structure of the machine according to the invention, with some components of the machine omitted; and
- Figures 6, 7 and 8 are schematic views of a telescopic shock absorber of the machine of Figure 5.

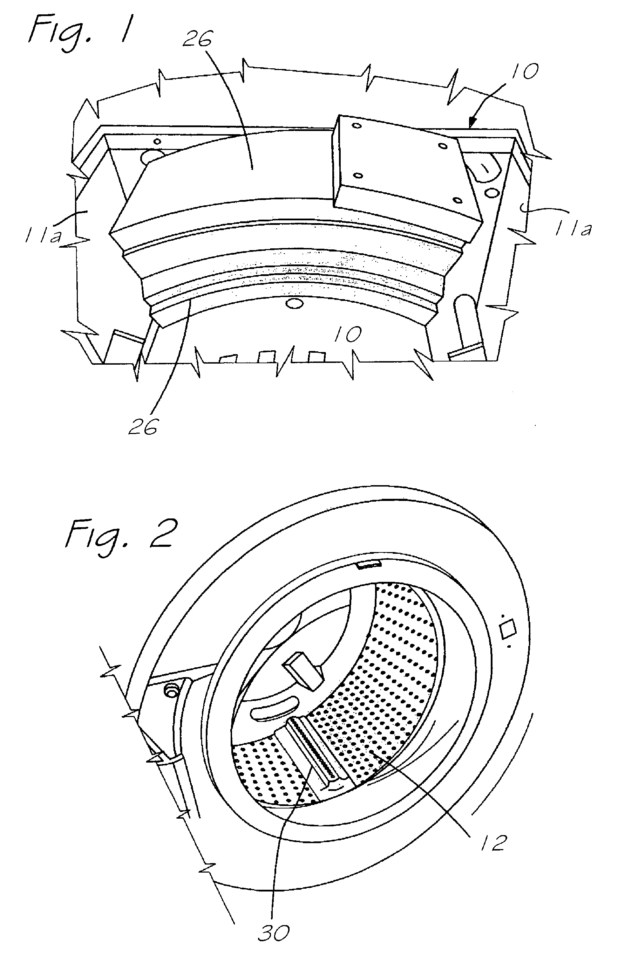

Figure 1 is a schematic perspective view of the upper elastic connection means between the tank and the structure for containing the washing machine according to a first characteristic of the invention;

Figure 2 is a schematic illustration, in view front, of the support of said upper elastic means;

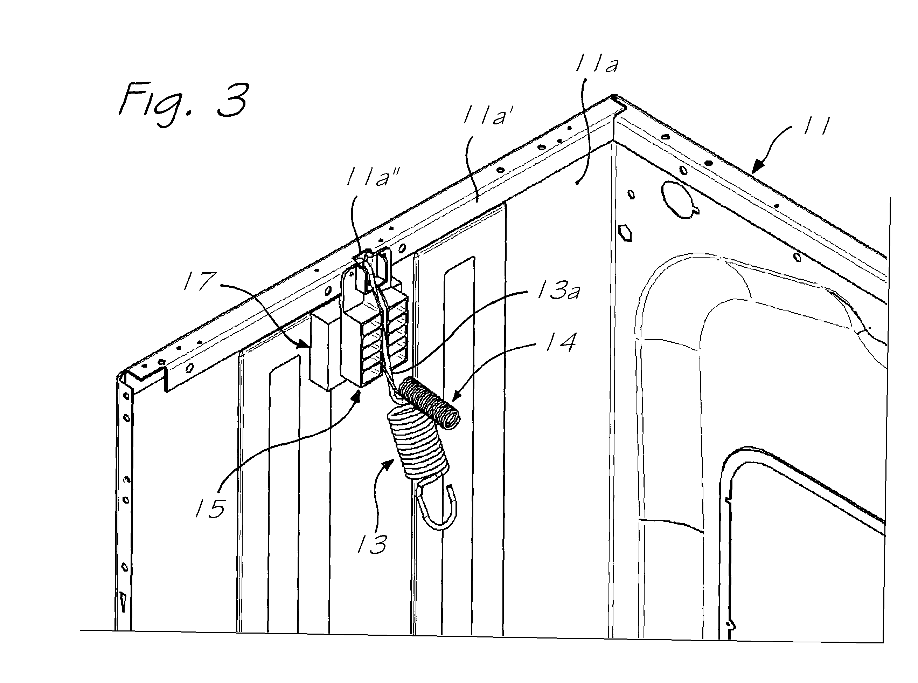

Figure 3 is a schematic perspective view of the lower shock-absorbing connection means between the tank and the structure for containing the washing machine according to a further characteristic of the invention;

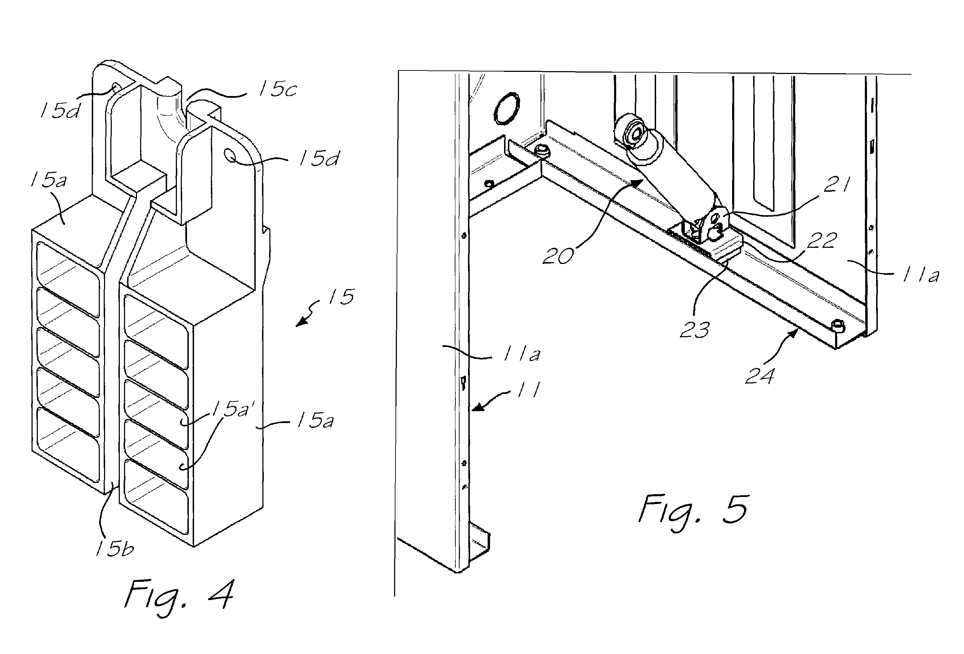

Figure 4 is a schematic illustration of the same shock-absorbing means in an inoperative condition.

The figures partially illustrate a machine for washing and possibly drying laundry, built according to the present invention. The machine, which can be of the front-loading type or top-loading type, comprises a tank, designated as a whole by 10 in Figure 1, connected at the upper part and the lower part to the internal walls of the body or supporting structure of the machine, partially visible in Figure 1, where it is designated by 11. In the tank 10 there is arranged the rotary drum of the machine, designated by 12 in Figure 2, which is moved with known means and is designed to contain the laundry to be treated.

The connection at the upper part is advantageously provided on two opposite sides of the machine and - according to an inventive aspect - comprises, on either side, a pair of elastic means. In particular, as represented in the example of Figure 3, a first elastic means 13 is constituted by a helical spring, arranged in substantial alignment with the inside of one of the walls or flanks 11 a of the body 11 of the machine, the opposite ends of which are, respectively, anchored with respect to the body itself, on one side, and with respect to the tank (not represented in Figure 3), on the opposite side. Combined to the first elastic means 13 is the second elastic means, designated by 14, likewise formed, in the example, by a helical spring, arranged radially in a direction that is substantially orthogonal to the spring 12.

The spring 13 has an upper extension 13a that develops in a substantially rectilinear way, to connect up then to the side 11a of the body 11, and is guided in a seat or slot made longitudinally on a shaped supporting or anchoring member 15, defined hereinafter as block, made of rubber, plastic or other suitable material, fixed with screws or equivalent means to the wall 11a of the body 11 of the machine. Obviously, an arrangement similar to the one visible in Figure 3 is present also on the other side of the body 11 (not visible in the figure).

A possible embodiment of the block 15 is shown in Figure 4. In this example, the body of the block 15 is made of plastic material and has front stiffening or reinforcement parts 15a, preferably projecting in cantilever fashion and arranged parallel to one another, between which the aforesaid guide slot is defined, designated by 15b, extending longitudinally. In the example shown, the parts 15a have a generally prismatic shape, each defming a plurality of hollow sectors 15a'. In the upper edge of the body of the block 15 there is formed a slot 15c, in substantial alignment with the longitudinal slot 15b, provided for engagement of the arched end of the upper extension 13a of the spring 13. In its upper part, the body of the block 15 has a pair of through holes, for fixing through screws to the upper edge of the flank 11a of the body 10. As appears in Figure 3, the aforesaid upper edge of the flank, designated by 11a', is bent to form a U turned upside down, and present therein is a slit 11a", the slot 15c of the block 15 being positioned in correspondence of said slit 11a". As has been said, the upper free end of the spring 13, bent to form a hook, is constrained to the shaped block 15.

Between the part of the shaped block 15 that projects below the edge 11a' and the side 11a there is arranged a shock-absorber pad 17, formed for example by medium-density elastomeric material. The pad 17 is fixed to the wall 11a of the body 11 with adhesives or equivalent means.

The second elastic means or spring 14 is fixed, at one of its ends, to the pad 18. For this purpose, in the material constituting the pad 18 there can be conveniently embedded a pin element, to which an end eyelet of the spring 14 (not visible) is engaged. Said end of the spring 14 could possibly be fixed also to the block 15.

The opposite end of the spring 14 is substantially free and is oriented in the direction of the tank 10. The combined effect of the springs 12 and 14, with the respective supports or blocks 15 and pads 17, determines a substantial reduction in the range of movement, both diametral and longitudinal, of the tank 10 during operation of the washing machine and, in particular, during the steps of ramp in centrifuging. It is to be noted that, in accordance with a possible variant embodiment, the body of the block 15 can be made of elastomeric or other resilient material, appropriately shaped to provide the functions of the pad 17 itself.

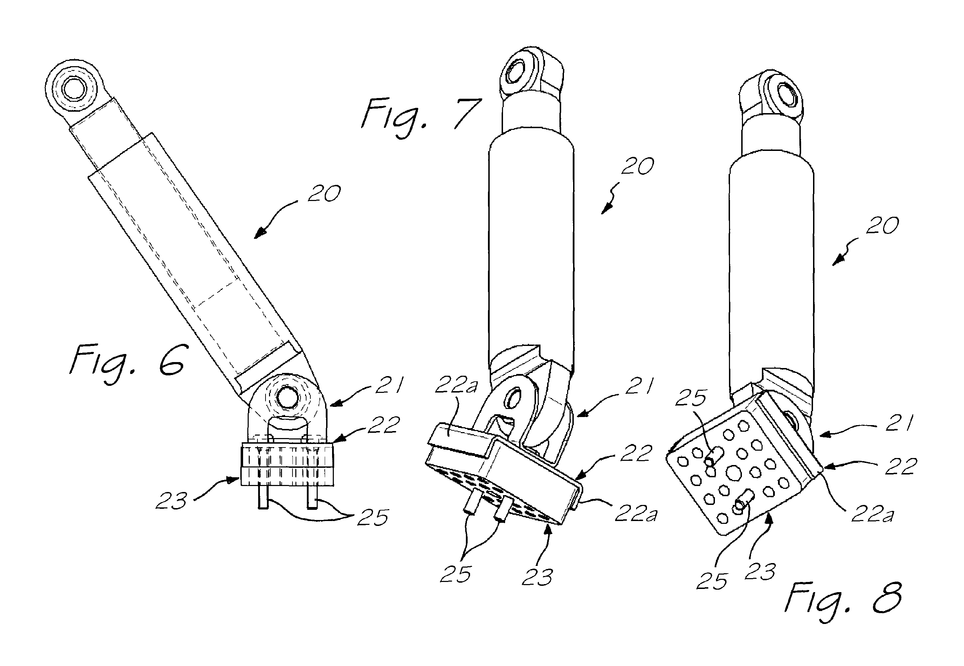

Also in its lower region, the tank 10 of Figure 1 is connected to the body 11 in two opposite points, via inclined telescopic shock-absorbers 20, one of which is represented in the operative condition in Figure 5 and, with different views, in Figures 6 and 7. According to a preferred characteristic of the invention, said shock-absorbers 20 are provided with an arm having a reduced maximum longitudinal extension, by way of example comprised between approximately 160 mm and 190 mm, whose opposite ends are fixed, on one side, to the tank 10 and, on the other side, to the base of the walls 11 a of the body 11. In the lower region of fixing to the body, each of the shock-absorbers 20 comprises a fork articulation or joint 21.

In accordance with an inventive aspect, for the purpose of containing the oscillations and vibrations that occur during operation of the machine, the base 22 of the joint 21 of each of the shock-absorbers 20 is provided with an insert or shock-absorbing plate 23, designed to contrast the containment body to which the shock-absorbers 20 are fixed and, in particular, to bear upon the lower base that extends towards the inside of the flanks of the body itself. As may be seen in Figure 5, the base of the flanks 11a can be represented by a substantially U-shaped sectional element, designated by 24. Alternatively, said base can be formed by a terminal par of the respective flank 11a, bent to form a U towards the inside of the body.

From Figures 6-8 it may be noted how the fork joint 21 of each shock-absorber 20 is fixed to or integral with a base plate 22, bent at two ends to form side wings 22a, and hence, as a whole, a body having the shape of a U turned upside down that is able to receive the aforesaid shock-absorbing plate 23, which here is substantially parallelepipedal.

The presence of the plate 24, which is made of rubber or some other suitable shock-absorbing material, increases the effect of absorption of the oscillations of the tank that occur during operation of the machine.

In the assembled condition, as may be seen in Figure 5, the plate 24 is housed within the longitudinal cavity of the sectional element 24, resting on the bottom of said cavity. The plate is constrained laterally by the base 22, through its wings tabs 22a, and constrained, at the front and at the rear, by the parallel walls of the sectional element 24 (as has been said, the functions of the sectional element could be performed by a bent terminal portion of the flank 11a).

The base 22 is secured to the sectional element 24 through a pair of screws or the like, designated by 25 in Figures 6-8, which extend from the base itself and pass into the plate 24.

In the frame of the greatest possible reduction of the oscillations of the tank 10, the counterweights of the machine used for this purpose are arranged, according to a further preferred characteristic of the invention, in a position corresponding to the curvature of the upper part of the tank itself.

Said counterweights, designated as a whole by 26 in Figure 1, are shaped so as to follow the curvature or profile of the upper part of the tank 10, being fixed thereto with adhesive, screws, brackets or suitable equivalent means.

According to a further preferred characteristic of the invention, the rotary drum 12 comprises, within it, a single entraining element, designated by 30 in Figure 2, which enables a better movement of the laundry, which falls more readily and rapidly, giving rise at the same time to a greater surface of exchange.

In the preferred embodiment, the particular arrangement and the sizing of the elastic means 12, 14 and of the shock-absorbers 20, together with the positioning of the counterweights 26 on the upper part of the tank 10, determines a substantial reduction in the oscillations of the tank itself during operation and in particular during the steps of centrifuging. Given the same overall dimensions, which remain the standard ones referred to for machines for washing cycles of 5 kg of laundry, the tank 10 can thus be appreciably enlarged without any danger of interference with the containment body. The dimensional increase obviously involves also the rotary drum 12, arranged within of the tank 10, the diameter of which can be increased by approximately 12% with respect to conventional drums, which leads to an increase of capacity of approximately 50%. Practical tests have made it possible to ascertain that the washing machine in the preferred embodiment described previously is able to wash at each cycle even 7-8.5 kg of laundry, without any structural problems or problems of displacement, albeit maintaining the standard dimensions of machines designed for washing 5 kg of laundry. The advantages may be readily appreciated, in terms of savings in energy, water and detergent. The larger capacity of the drum, which is further increased by the presence of just one entraining element 30, renders the washing machine extremely flexible for loading, enabling provision of a plurality of programs or washing cycles that are able to meet the widest possible range of user requirements.

Furthermore, on account of the increased loading capacity given the same dimensions of the body, the washing machine described can be provided, in the case of front loading, with a markedly oversized porthole, with a useful loading aperture of between 300 and 350 mm.

Even though the invention has been described above with particular reference to an embodiment thereof provided purely by way of non-limiting example, numerous possible modifications will appear clearly evident to a person skilled in the branch in the light of the foregoing description. The present invention is consequently intended to embrace all the modifications and variations that fall within the spirit and the sphere of protection of the ensuing claims.

## Claims

1. A machine for washing and/or drying laundry, comprising:
- a supporting structure (11) for a washing tank (10),
- a rotary drum (12) housed in the tank (10),
- counterweight means (26),
- shock-absorbing means (20) and elastic means (13, 14) connected to walls of said structure (11),
wherein the shock-absorbing means (20) comprise at least two telescopic shock absorbers (20) connected, at the respective upper end, to opposite areas of the lower region of the tank (10),
**characterized in that** each of said telescopic shock absorbers (20) has a longitudinal extension comprised between approximately 160 and 190 mm and is operatively associated, at the respective lower end, to a joint (21), preferably a fork joint, having a base (22) which is associated to a first shock-absorbing element (23) made of resilient material, preferably elastomeric material, the first shock-absorbing element (23) bearing upon said structure (11), in a lower region (24) of a respective flank or side wall (11a) of the structure itself.

2. The machine according to Claim 1, **characterized in that** the elastic means comprise a first elastic element (13) and a second elastic element (14), particularly in the form of helical springs, for each flank (11a) of the structure (11),
wherein the first elastic element (13) is anchored, on one side, to a respective flank (10a) of the structure (11) and, on the other side, to the upper region of the tank (10), and wherein the second elastic element (14) extends substantially in a transverse direction with respect to the first elastic element (13).

3. The machine according to Claim 2, **characterized in that** the first elastic element (13) has an upper extension (13a) with a substantially rectilinear development, inserted or guided at least in part in a longitudinal slot (15a) of a shaped supporting member (15) fixed to said structure (11), said extension (13a) having an upper end anchored to the supporting member (15).

4. The machine according to Claim 3, **characterized in that** between a rear region of the supporting member (15) and a respective region of a flank (11a) of the structure (11) a second shock-absorbing element (17) is arranged, made of resilient material, preferably elastomeric material.

5. The machine according to Claim 3 or Claim 4, **characterized in that** the second elastic element (14) has one end anchored to the supporting member (15) or to the shock-absorbing element (17), the other end being free and facing a respective upper region of the tank (10), where in particular the second elastic element (14) is oriented according to a direction substantially orthogonal with respect to the first elastic element (13).

6. The machine according to Claim 1, **characterized in that** the counterweight means (26) are fixed to the upper part of the tank (10) and are at least in part shaped so as to follow a curved profile of the tank itself.

7. The machine according to Claim 1, **characterized in that** the drum (11) is provided with a single entraining element (30), fixed to the inner surface of the drum itself.

8. The machine according to any one of the preceding claims, **characterized in that** it is of the front-loading type, with a porthole in which the useful loading aperture is comprised between 300 and 350 mm.

9. The machine according to Claim 3, **characterized in that** the supporting member (15) has an upper edge in which there is formed a seat (15c) for the engagement of the upper end of said extension (13a) of the first elastic element (13), said seat (15c) being in substantial alignment with said longitudinal slot (15b), and **in that** the supporting member (15) is fixed to an upper edge (11a') of a respective flank (11a) of the structure (11), bent in towards the inside of the structure.

10. The machine according to Claim 1, **characterized in that** the first shock-absorbing element is constituted by a plate (24), which is housed at least in part within a longitudinal cavity present in said lower region (24) of the flank (10a) of the structure (10), the plate (24) being constrained laterally through wings (22a) of the base (22) of said joint (21) and constrained at the front and at the rear through surfaces delimiting said cavity, said base (22) being secured at the bottom of said cavity through screws or the like (21) passing into the plate (24).
